# EUROPÄISCHE PATENTSCHRIFT

(11) **EP 1 674 314 B1**
(45) Veröffentlichungstag und Bekanntmachung des Hinweises auf die Patenterteilung: **07.10.2009**
(21) Anmeldenummer: 05027042.0
(22) Anmeldetag: 10.12.2005
(51) Int. Cl.: B60J 7/02, B60J 7/05

(54) **Verstelleinrichtung für einen Deckel an einem Fahrzeugdach**
Regulating mechanism for a roof panel in a vehicle roof
Dispositif de réglage pour un panneau de toit d'un véhicule

(30) Priorität: 21.12.2004 DE 102004061376
(43) Veröffentlichungstag der Anmeldung: 28.06.2006
(73) Patentinhaber: Bayerische Motoren Werke Aktiengesellschaft, 80809 München (DE)
(72) Erfinder: Seibt, Klaus, 85764 Oberschleissheim (DE)

(56) Entgegenhaltungen:
- EP-A1- 0 555 977
- WO-A-03/086798
- DE-A1- 4 108 197
- DE-A1- 4 137 578
- DE-A1- 10 158 174
- DE-C1- 10 009 387

## Beschreibung

Die Erfindung betrifft eine Verstelleinrichtung für einen Deckel an einem Fahrzeugdach, mit den im Oberbegriff des Patentanspruches 1 angegebenen Merkmalen.

Eine derartige Verstelleinrichtung ist in der DE 38 25 193 A1 für den Deckel eines Schiebehebedaches an einem Kraftfahrzeug vorgesehen, mit der beim Ausstellen und Absenken der Hinterkante des Deckels die Deckelvorderkante so zurück verstellt wird, dass ein am vorderen Rand der von dem Deckel verschließbaren Dachöffnung angeordnetes Bauteil, beispielsweise ein Windabweiser, nicht eingeklemmt und dadurch beschädigt wird. Hierzu ist ein Ende einer Führungsschiene als kreisringabschnittförmiges Bogenelement ausgebildet, das in eine entsprechende Führung eines Führungselements eingreift, wodurch das Bogenelement um eine virtuelle, über dem Führungselement befindliche Querachse schwenkbar ist. Über die Führung des Bogenelements lässt sich die Lage der Deckelvorderkante beim Ausstellen und/oder Absenken der Hinterkante des Deckels noch nicht optimal einstellen. Die Verstelleinrichtung ist aufwändig gestaltet und dadurch teuer zu fertigen.

DE 101 58 174 A1 und DE 0 555 977 A1 offenbaren ähnliche Verstelleinrichtungen.

Der Erfindung liegt die Aufgabe zu Grunde, eine Verstelleinrichtung mit den Merkmalen im Oberbegriff des Patentanspruches 1 anzugeben, die eine genauere Lageeinstellung des Deckels mit einfacheren Mitteln ermöglicht.

Diese Aufgabe ist durch die Merkmale im Patentanspruch 1 gelöst. Vorteilhafte Ausgestaltungen der Erfindung sind den Unteransprüchen entnehmbar.

Die Ausbildung der eine vordere Schwenkachse für den Deckel bildenden Querachse an einem Verstellteil, das in einer vorgebbaren Weise anders als der von einer Ausstell- und/oder Absenkeinrichtung verstellbare Deckel von einem Verstellmechanismus verstellbar ist, ermöglicht durch den vorgebbaren Verstellmechanismus und die vorgebbare Lage der Querachse ein gewünschtes Bewegungsverhalten des Verstellteiles und damit der Querachse. Dadurch ist es beispielsweise möglich, beim Ausstellen und/oder Absenken der Hinterkante des Deckels die Deckelvorderkante lagefest zu halten oder so zu verstellen, dass eine vor der Deckelvorderkante angeordnete Dichtung oder ein Windabweiser nicht komprimiert und dabei eventuell beschädigt wird. Ebenso kann die Deckelvorderkante so verstellt werden, dass sich eine günstigere Luftströmung einstellt und/oder Luftgeräusche vermieden oder vermindert sind.

Ein Ausführungsbeispiel der Erfindung wird anhand einer Zeichnung näher erläutert. Es zeigen
- Fig. 1: eine seitliche Schnittansicht des Deckels in seiner Schließlage,
- Fig. 2: eine Fig. 1 entsprechende Ansicht bei mit der Hinterkante ausgestelltem Deckel,
- Fig. 3: eine Fig. 1 entsprechende Ansicht bei mit der Hinterkante abgesenktem Deckel,
- Fig. 4: das Verstellteil in einer seitlichen Schnittansicht, in der sich der Deckel in einer Fig. 1 entsprechenden Lage befindet,
- Fig. 5: das Verstellteil in einer seitlichen Schnittansicht, in der sich der Deckel in einer Fig. 2 entsprechenden Lage befindet,
- Fig. 6: das Verstellteil in einer seitlichen Schnittansicht, in der sich der Deckel in einer Fig. 3 entsprechenden Lage befindet,
- Fig. 7: eine perspektivische Schrägansicht auf das Kulissenteil und das Verstellteil, ohne den mit seiner Hinterkante ausgestellten Deckel,
- Fig. 8: eine Draufsicht auf das Kulissenteil und das Verstellteil,
- Fig. 9: einen Querschnitt des Führungsschlittens im Bereich seines Führungsbolzens und
- Fig. 10: einen Querschnitt des Gleitelements im Bereich der Achse des Verstellteiles.

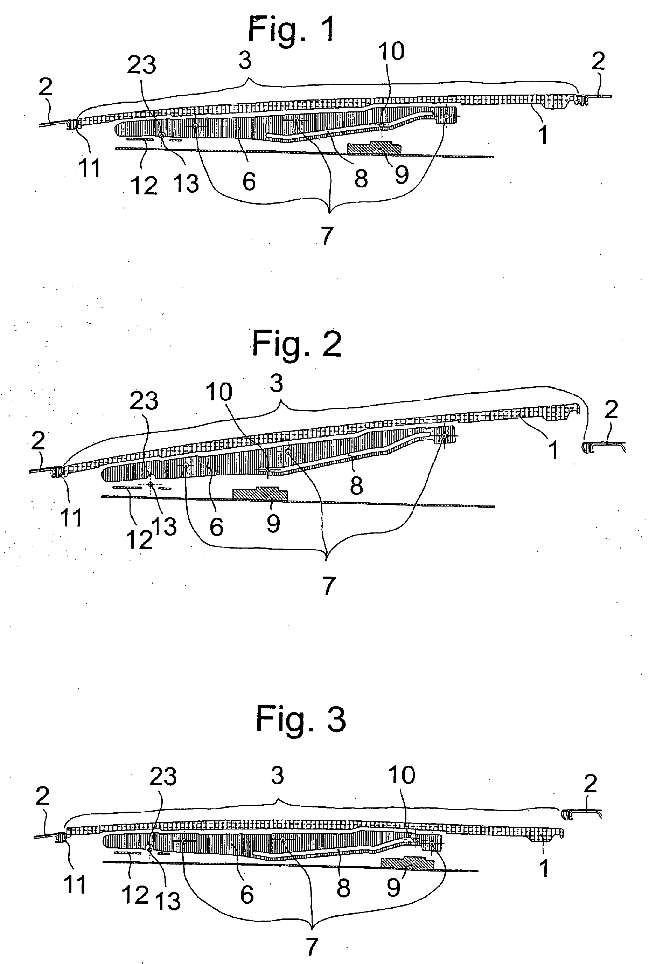

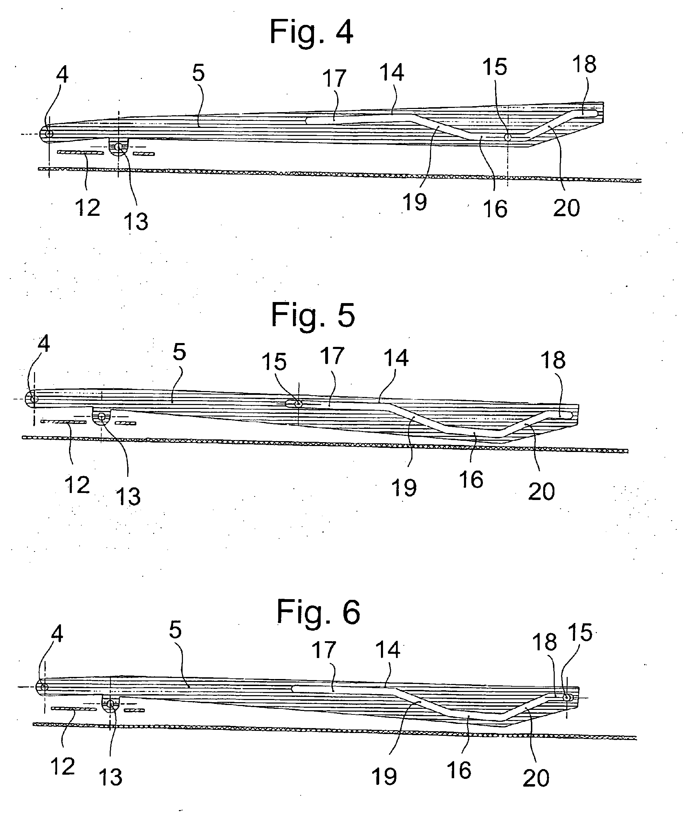

In Figur 1 ist der Deckel 1 eines im Dachbereich 2 eines Kraftfahrzeugs vorgesehenen Schiebehebedaches in einer Schließlage dargestellt, in der eine Dachöffnung 3 von dem Deckel 1 etwa bündig mit dem Dachbereich 2 verschlossen ist. Der Deckel 1 ist um eine vordere, in den Figuren 4 bis 6 dargestellte Querachse 4 schwenkbar, die in Fahrzeugquerrichtung verlaufend im vorderen Bereich eines beispielsweise in den Figuren 4 bis 6 dargestellten Verstellteiles 5 ausgebildet ist.

Der Deckel 1 ist mit seiner Hinterkante über eine Ausstell- und/oder Absenkeinrichtung in die in Figur 2 dargestellte Ausstelllage ausstellbar. Hierzu sind seitlich gegenüber liegend jeweils ein Kulissenteil 6 vorgesehen, das beispielsweise an Befestigungspunkten 7 mit einem zugeordneten Seitenbereich des Deckels 1 verbunden ist. Die Ausstell- und/oder Absenkeinrichtung weist eine Kulisse 8 im Kulissenteil 6 und einen von einem Führungsschlitten 9 seitlich abstehenden Führungsbolzen 10 auf, der in die Kulisse 8 mit in Höhenrichtung keinem oder einem geringen Passungsspiel eingreift. Der Führungsschlitten 9 ist motorisch etwa in Fahrzeuglängsrichtung verstellbar. Die Kulisse 8 ist vorgebbar und weist beispielsweise hinter der Querachse 4 einen den Figuren 1 bis 3 entsprechenden Verlauf auf, bei dem die Kulisse 8 bei in Schließlage befindlichem Deckel 1 nach hinten oben ansteigt.

Damit der Deckel 1 beim Ausstellen seiner Hinterkante nicht mit der Deckelvorderkante eine am vorderen Rand der Dachöffnung 3 angeordnete Dichtung 11 in Fahrzeuglängsrichtung komprimiert und etwa in einer gleichen Höhenlage verbleibt, ist das in den Figuren 4 bis 6 in einer Seitenansicht dargestellte Verstellteil 5, das mit der Querachse 4 eine vordere Schwenkachse für den Deckel 1 bildet, über einen Verstellmechanismus in Höhenrichtung und unabhängig davon in Fahrzeuglängsrichtung verstellbar.

Hierzu weist der Verstellmechanismus einen in Fahrzeuglängsrichtung verstellbares Gleitelement 12 auf, das eine zur Querachse 4 parallele Achse 13 bildet, um die das Verstellteil 5 schwenkbar ist. Das Gleitelement 12 ist zumindest in der Schließlage des Deckels 1 arretierbar. In Schließlage des Deckels 1 befindet sich die Achse 13 hinter und unter der Querachse 4. Das Verstellteil 5 ist ein Schwenkhebel, der an seinem vorderen Bereich um die Achse 13 schwenkbar ist und mit seiner Hinterkante über eine hinter der Achse 13 vorgesehene Zapfen-/Kulissenführung in Höhenrichtung verstellbar ist.

Die Zapfen-/Kulissenführung weist eine Kulissenführung 14 im Verstellteil 5 und einen von einem Verschiebeteil seitlich abstehenden Zapfen 15 auf, der in die Kulissenführung 14 mit in Höhenrichtung keinem oder einem geringen Passungsspiel eingreift. Bei dem Ausführungsbeispiel ist das Verschiebeteil durch den Führungsschlitten 9 gebildet. Die Kulissenführung 14 weist einen tiefliegenden mittleren Bereich 16 und einen vorderen 17 sowie einen hinteren jeweils hochliegenden Bereich 18 auf, die in der Schließlage des Deckels 1 etwa horizontal verlaufen. Der tiefliegende mittlere Bereich 16 und der vordere hochliegende Bereich 17 der Kulissenführung 14 sind über einen nach vorne oben ansteigenden vorderen Übergangsbereich 19 verbunden. Außerdem sind der tiefliegende mittlere Bereich 16 und der hintere hochliegende Bereich 18 über einen nach hinten oben ansteigenden hinteren Übergangsbereich 20 verbunden.

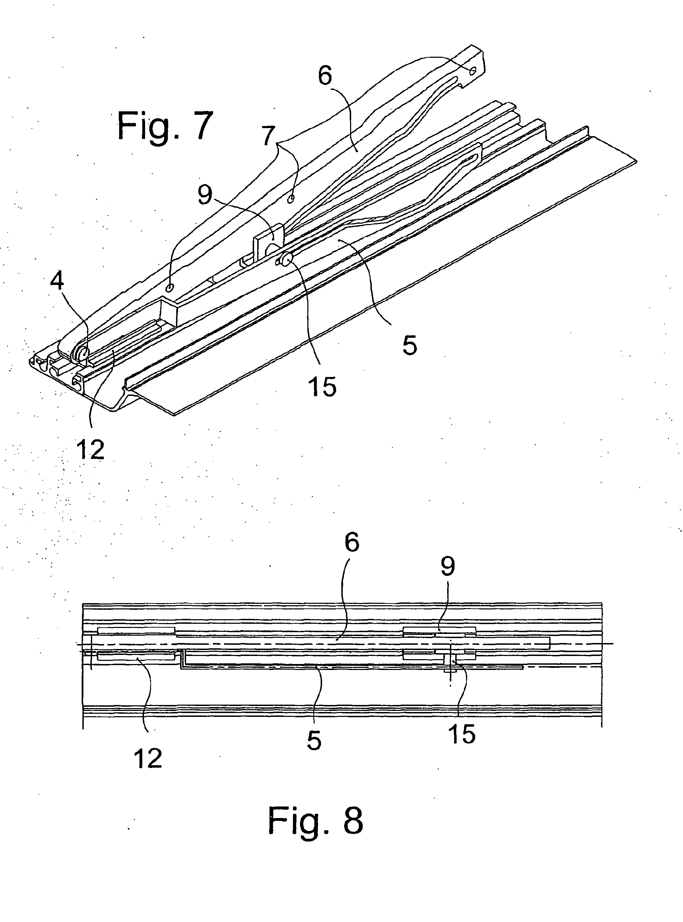

Den Figuren 7 und 8 sind weitere Einzelheiten entnehmbar, in denen das Kulissenteil 6 und das Verstellteil 5 jeweils in eine Lage verstellt sind, die der maximalen Ausstelllage des nicht dargestellten Deckels 1 entspricht.

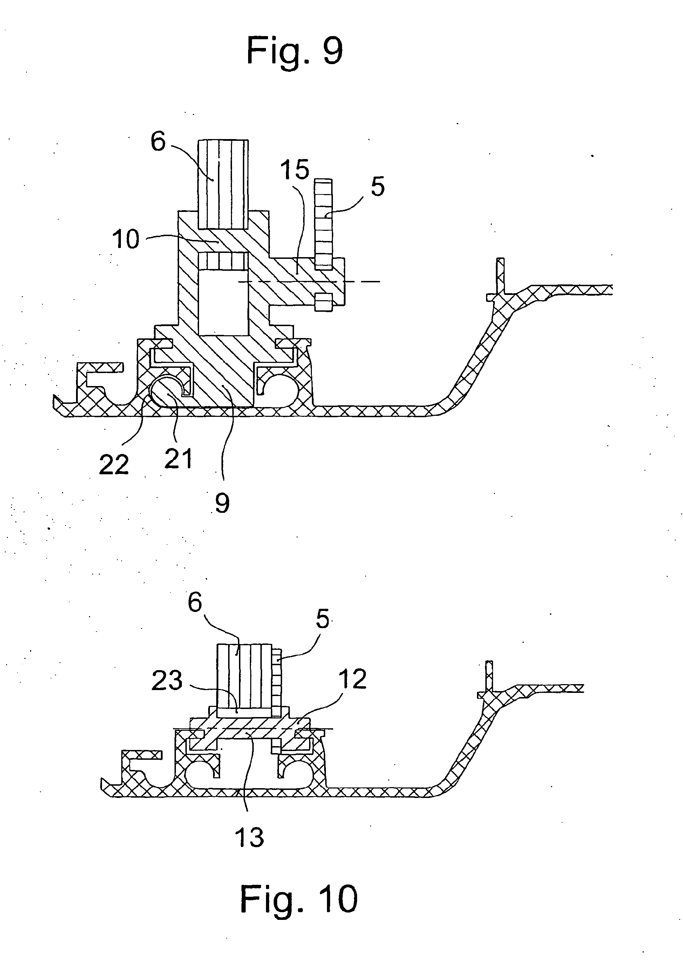

Der in einer Dachführung längsverstellbare Führungsschlitten 9 ist in Fig. 9 in einem Querschnitt im Bereich des Führungsbolzens 10 dargestellt, in dem erkennbar ist, dass bei dem Ausführungsbeispiel auch der Zapfen 15 an dem Führungsschlitten 9 ausgebildet ist und von diesem seitlich absteht. In der Figur ist erkennbar, dass der Führungsschlitten 9 über ein Antriebsseil 21 verstellbar ist, das in einer Dachführung 22 geführt ist.

Ein Querschnitt des in einer Dachführung längsverstellbaren Gleitelements 12 im Bereich der Achse 13 des Verstellteiles 5 ist in Fig. 10 dargestellt, dem weitere Einzelheiten entnehmbar sind. Im Bereich der Achse 13 weist das Kulissenteil 6 eine Ausnehmung 23 auf, die in Höhenrichtung so bemessen ist, dass die Achse 13 ein Absenken der Hinterkante des Deckels 1 in die in Figur 3 dargestellte Absenklage nicht behindert.

In der Schließlage des Deckels 1 befindet sich der Zapfen 15 in Fahrzeuglängsrichtung etwa in der Mitte des tiefliegenden mittleren Bereiches 16 der Kulissenführung 14.

Wird der in den Figuren 1 bis 3 dargestellte Führungsschlitten 9 motorisch nach vorne verstellt und ist dabei das Gleitelement 12 arretiert, verlagert sich der Führungsbolzen 10 in der Kulisse 8 nach vorne und stellt dabei die Hinterkante des Deckels 1 nach oben aus. Da sich gemäß den Figuren 4 bis 6 die eine vordere Schwenkachse für den Deckel 1 bildende Querachse 4 vor und über der Achse 13 befindet und die Vorderkante des Deckels 1 mit einem in den Figuren nicht erkennbaren Maß vor der Querachse 4 angeordnet ist, würde sich beim Ausstellen der Hinterkante des Deckels 1 die Deckelvorderkante nach vorne und unten verstellen und dabei die am vorderen Rand der Dachöffnung 3 befindliche Dichtung 11 komprimieren und dabei eventuell beschädigen.

Dies wird dadurch verhindert, dass beim Ausstellen des Deckels 1 der am Führungsschlitten 9 angeordnete Zapfen 15 in der Kulissenführung 14 nach vorne gleitet und im Zusammenwirken mit dem vorderen Übergangsbereich 19 das Verstellteil 5 entgegengesetzt zum Kulissenteil 6 hinten nach unten verschwenkt, wodurch die vordere Querachse 4 derart angehoben und etwas nach hinten verlagert wird, dass die Deckelvorderkante in einer der Schließlage des Deckels 1 entsprechenden Lage verbleibt. Dies ergibt sich durch einen Vergleich der Figuren 1 und 2.

Nach dem Absenken der Hinterkante des Verstellteiles 5 kann der Zapfen 15 beim weiteren Ausstellen der Hinterkante des Deckels 1 in dem vorderen, hochliegenden Bereich 17 der Kulissenführung 14 nach vorne verstellt werden. Bei vollständig ausgestelltem Deckel 1 befindet sich der Zapfen 15 in der in Figur 5 dargestellten vorderen Lage.

Beim Absenken der Hinterkante des Deckels 1 wird der Führungsbolzen 10 in der Kulisse 8 nach hinten in die in Figur 3 dargestellte Lage verstellt. Gleichzeitig wird der Zapfen 15 aus der Figur 4 entsprechenden Schließlage des Deckels 1 nach hinten in die in Figur 6 angegebene hintere Lage verstellt. Ein Absenken der Hinterkante des Verstellteiles 5 wird dabei im Zusammenwirken des Zapfens 15 mit dem hinteren Übergangsbereich 20 der Kulissenführung 14 bewirkt. Während beim Ausstellen der Hinterkante des Deckels 1 das Kulissenteil 6 und das Verstellteil 5 gegensinnig verschwenken, werden beim Absenken der Hinterkante des Deckels 1 das Kulissenteil 6 und das Verstellteil 5 gleichsinnig, das Verstellteil 5 jeweils mit seiner Hinterkante nach unten verstellt. Dadurch befindet sich bei mit der Hinterkante abgesenktem Deckel 1 die Vorderkante des Deckels 1 etwas über dem Dachbereich 2, wie dies in Figur 3 dargestellt ist.

Aus dieser abgesenkten Lage des Deckels 1 kann nach dem Lösen der Arretierung des Gleitelements 12 der Deckel 1 nach hinten in ein nicht dargestelltes Aufnahmefach unter der Dachaußenfläche zumindest teilweise zurück verlagert werden. Dazu wird der Führungsschlitten 9 nach hinten verstellt, der im Zusammenwirken entweder des Führungsbolzens 10 mit dem hinteren Ende der Kulisse 8 oder des Zapfens 15 mit dem hinteren Ende der Kulissenführung 14 den Deckel 1 entsprechend zurück verstellt. Das freigegebene Gleitelement 12 gleitet dabei in seiner Dachführung antriebslos entlang.

Bei dem Ausführungsbeispiel sind der Führungsschlitten 9 und das Gleitelement 12 in derselben Dachführung verstellbar. Ebenso können der Führungsschlitten und das Gleitelement in separaten Dachführungen verstellbar sein. Die Ausstell- und/oder Absenkeinrichtung sowie der Verstellmechanismus können von dem Ausführungsbeispiel abweichend gebildet sein. Bei Verwendung einer Kulisse und eventuell einer Kulissenführung können diese einen beliebigen Verlauf aufweisen. An Stelle der Querachse und eventuell der Achse kann jeweils auch eine andere reelle oder virtuelle, ortsfeste oder ortsveränderliche Schwenkachse vorgesehen sein. Bei Verwendung einer Kulisse kann diese auch im Deckel oder an einem mit dem Deckel fest oder gelenkig verbundenen Kulissenteil vorgesehen sein. Bei Verwendung eines in eine Kulisse eingreifenden Führungsbolzens kann dieser an dem Führungsschlitten ausgebildet oder an einem Ausstell- und/oder Absenkhebel angeordnet sein und beispielsweise von diesem seitlich abstehen. Bei Verwendung einer Kulissenführung kann diese nicht nur im Verstellteil, sondern auch in einem Schwenkhebel ausgebildet sein. Ist ein Zapfen vorgesehen, der in die Kulissenführung eingreift, kann dieser nicht nur an dem Verschiebeteil, sondern beispielsweise auch an einem Verstellhebel ausgebildet sein und eventuell von diesem seitlich abstehen.

## Patentansprüche

1. Verstelleinrichtung für einen Deckel (1) an einem Fahrzeugdach (2), der an seinem vorderen Bereich um eine Querachse (4) schwenkbar mit einem Verstellteil (5) verbunden ist und mit seinem hinteren Bereich über eine Ausstellund/oder Absenkeinrichtung (8, 9, 10) aus einer mit dem Fahrzeugdach (2) etwa bündigen Schließlage nach oben ausstellbar und/oder nach unten absenkbar ist, und wobei das Verstellteil (5) mit seiner Hinterkante über eine Zapfen-/Kulissenführung (14, 15) in Höhenrichtung verstellbar ist, wobei die Querachse (4) reell oder virtuell ortsfest oder ortsveränderlich an dem Verstellteil (5) ausgebildet ist und das Verstellteil (5) an seinem vorderen Bereich um eine zur Querachse (4) parallele Achse (13) schwenkbar an einem in Fahrzeuglängsrichtung verstellbaren Gleitelement (12) angelenkt ist und die Zapfen-/Kulissenführung (14, 15) hinter der Achse (13) vorgesehen ist **dadurch gekennzeichnet dass** das Gleitelement (12) zumindest in der Schließlage des Deckels (1) arretierbar und beim Ausstellen der Hinterkante des Deckels (1) arretiert ist.

2. Verstelleinrichtung nach Anspruch 1, **dadurch gekennzeichnet, dass** die Ausstell- und/oder Absenkeinrichtung eine Kulisse (8) im Deckel oder an einem mit dem Deckel fest oder gelenkig verbundenen Kulissenteil (6) und einen von einem Führungsschlitten (9) oder von einem Ausstell- und/oder Absenkhebel abstehenden Führungsbolzen (10) aufweist, der in die Kulisse (8) mit in Höhenrichtung keinem oder einem geringen Passungsspiel eingreift.

3. Verstelleinrichtung nach Anspruch 2, **dadurch gekennzeichnet, dass** der Führungsschlitten (9) in Fahrzeuglängsrichtung verstellbar ist und die Kulisse (8) hinter der Querachse (4) ausgebildet ist und nach hinten oben ansteigt.

4. Verstelleinrichtung nach Anspruch 1, **dadurch gekennzeichnet, dass** die Achse (13) in Schließlage des Deckels (1) hinter und unter der Querachse (4) ausgebildet ist.

5. Verstelleinrichtung nach einem der Ansprüche 1 bis 4, **dadurch gekennzeichnet, dass** das Verstellteil (5) ein Schwenkhebel ist.

6. Verstelleinrichtung nach Anspruch 5, **dadurch gekennzeichnet, dass** die Zapfen-/Kulissenführung eine Kulissenführung (14) im Verstellteil (5) bzw. Schwenkhebel und einen von einem Führungsschlitten (9) oder von einem Verstellhebel abstehenden Zapfen (15) gebildet ist, der in die Kulissenführung (14) mit in Höhenrichtung keinem oder einem geringen Passungsspiel eingreift.

7. Verstelleinrichtung nach Anspruch 5 oder 6, **dadurch gekennzeichnet, dass** die Kulissenführung (14) der Zapfen-/Kulissenführung einen tiefliegenden mittleren Bereich (16) und einen vorderen (17) sowie einen hinteren jeweils hochliegenden Bereich (18) aufweist, die in der Schließlage des Deckels (1) etwa horizontal verlaufen.

8. Verstelleinrichtung nach Anspruch 7, **dadurch gekennzeichnet, dass** der tiefliegende mittlere Bereich (16) und der vordere hochliegende Bereich (17) der Kulissenführung (14) über einen nach vorne oben ansteigenden vorderen Übergangsbereich (19) verbunden sind und der tiefliegende mittlere Bereich (16) und der hintere hochliegende Bereich (18) der Kulissenführung (14) über einen nach hinten oben ansteigenden hinteren Übergangsbereich (20) verbunden sind.

9. Verstelleinrichtung nach einem der Ansprüche 6 bis 8, **dadurch gekennzeichnet, dass** der Führungsbolzen (10) und der Zapfen (15) an dem Führungsschlitten (9) ausgebildet sind, der in Fahrzeuglängsrichtung motorisch verstellbar ist.

10. Verstelleinrichtung nach einem der Ansprüche 3 bis 9, **dadurch gekennzeichnet, dass** das Verstellteil (5) und das Kulissenteil (6) beim Ausstellen der Hinterkante des Deckels (1) entgegengesetzt und beim Absenken der Hinterkante des Deckels (1) gleichsinnig, das Verstellteil (5) jeweils mit seinem hinteren Bereich nach unten, verschwenken.

## Claims

1. An adjustment device for a cover (1) on a vehicle roof (2), which, at its front region, is pivotably connected to an adjustment part (5) about a transverse axis (4) and can be set up or lowered down by its rear region by means of a setting and/or lowering device (8, 9, 10) from a closed position which is approximately flush with the vehicle roof (2), and wherein the adjustment part (5) can be adjusted by its rear edge by means of a pin/link guide (14, 15) in the height direction, wherein the transverse axis (4) is really or virtually formed in a fixed or movable manner on the adjustment part (5), and the adjustment part (5), at its front region, is articulated so as to be pivotable about an axis (13), which is parallel to the transverse axis (4), on a sliding element (12) which can be adjusted in the longitudinal direction of the vehicle, and the pin/link guide (14, 15) is provided behind the axis (13), **characterised in that** the sliding element (12) can be locked at least in the closed position of the cover (1) and can be locked during the setting of the rear edge of the cover (1).

2. An adjustment device according to claim 1, **characterised in that** the setting and/or lowering device has a link (8) in the cover or on a link part (6) connected in fixed or articulated manner to the cover, and a guide bolt (10), which projects from a guide slide (9) or from a setting and/or lowering lever, which guide bolt engages in the link (8) with no or only slight fitting tolerance in the height direction.

3. An adjustment device according to claim 2, **characterised in that** the guide slide (9) can be adjusted in the longitudinal direction of the vehicle and the link (8) is formed behind the transverse axis (4) and rises up at the back.

4. An adjustment device according to claim 1, **characterised in that** the axis (13), in the closed position of the cover (1), is formed behind and below the transverse axis (4).

5. An adjustment device according to any one of claims 1 to 4, **characterised in that** the adjustment part (5) is a pivot lever.

6. An adjustment device according to claim 5, **characterised in that** the pin/link guide is formed from a link guide (14) in the adjustment part (5) and a pin (15) projecting from a guide slide (9) or from an adjustment lever, which pin engages in the link guide (14) with no or slight fitting tolerance in the height direction.

7. An adjustment device according to claim 5 or claim 6, **characterised in that** the link guide (14) of the pin/link guide has a low central region (16) and a front region (17) as well as a respective rear high region (18), which extend approximately horizontally in the closed position of the cover (1).

8. An adjustment device according to claim 7, **characterised in that** the low central region (16) and the front high region (17) of the link guide (14) are connected by means of a front transition region (19) rising up at the front, and the low central region (16) and the rear high region (18) of the link guide (14) are connected by means of a rear transition region (20) rising up at the back.

9. An adjustment device according to any one of claims 6 to 8, **characterised in that** the guide bolt (10) and the pin (15) are formed on the guide slide (9), which can be adjusted by a motor in the longitudinal direction of the vehicle.

10. An adjustment device according to any one of claims 3 to 9, **characterised in that** the adjustment part (5) and the link part (6) pivot in the opposite direction when setting the rear edge of the cover (1) and pivot in the same direction when lowering the rear edge of the cover (1), the adjustment part (5) having its rear region downward in each case.

## Revendications

1. Installation de réglage d'un panneau (1) de toit de véhicule (2) dont la zone avant est reliée de manière pivotante par un axe transversal (4) à une pièce de réglage (5), la zone arrière de ce panneau pouvant être sortie relevée par une installation de débattement et/ou d'abaissement (8, 9, 10) à partir d'une position de fermeture sensiblement à niveau avec le toit (2) du véhicule et/ou être abaissée et
le bord arrière de la pièce de réglage (5) étant déplacé dans le sens de la hauteur par un guidage par coulisse et goujon (14, 15),
l'axe transversal (4) étant réel ou virtuel, fixe ou variable sur la pièce de réglage (5) et
la zone avant de la pièce de réglage (5) étant articulée à un élément coulissent (12) réglable dans la direction longitudinale du véhicule en pivotant autour d'un axe (13) parallèle à l'axe transversal (4), et
le guidage par coulisse et goujon (14, 15) est derrière l'axe (13),
**caractérisée en ce que**
l'élément coulissant (12) peut être bloqué au moins dans la position de fermeture du panneau (1) et dans la position de sortie de l'arête arrière du panneau (1).

2. Installation de réglage selon la revendication 1"
**caractérisée en ce que**
l'installation de relèvement et/ou d'abaissement comporte une coulisse (8) dans le panneau ou une partie de coulisse (6) reliée solidairement au panneau ou de manière articulée et un goujon de guidage (10) en saillie du chariot de guidage (9) ou en saillie d'un levier de relevage et/ou d'abaissement, le goujon de guidage (10) se logeant dans la coulisse, sans jeu d'ajustage ou avec un jeu d'ajustage faible en hauteur.

3. Installation de réglage selon la revendication 2,
**caractérisée en ce que**
le chariot de guidage (9) est réglable dans la direction longitudinale du véhicule et la coulisse (8) réalisée derrière l'axe transversal (4) et remonte vers l'arrière.

4. Installation de réglage selon la revendication 1,
**caractérisée en ce qu'**
en position de fermeture du panneau (1), la coulisse (13) se trouve derrière et sous l'axe transversal (4).

5. Installation de réglage selon l'une des revendications 1 à 4,
**caractérisée en ce que**
la pièce de réglage (5) est un levier pivotant.

6. Installation de réglage selon la revendication 5,
**caractérisée en ce que**
le guidage par coulisse et goujon se compose d'une coulisse de guidage (14) dans la pièce réglage (5) et d'un goujon (15) en saillie du chariot de guidage (9) ou d'un levier de réglage et qui pénètre dans la coulisse de guidage (14) sans jeu d'ajustage ou avec seulement un faible jeu d'ajustage en hauteur.

7. Installation de réglage selon la revendication 5 ou la revendication 6,
**caractérisée en ce que**
la coulisse de guidage (14) comporte une zone (16) médiane basse et une zone avant (17) ainsi qu'une zone arrière (18) relevées, et qui sont sensiblement horizontales lorsque le panneau (1) est en position fermée.

8. Installation de réglage selon la revendication 7,
**caractérisée en ce que**
la zone médiane basse (16) et la zone avant haute (17) du guidage à coulisse (14) sont reliées par une zone transitoire (19) avant, remontant vers l'avant et la zone médiane (16), basse ainsi que la zone arrière haute (18) de la coulisse de guidage (14) sont reliées par une zone transitoire (20) remontant vers l'arrière.

9. Installation de réglage selon l'une quelconque des revendications 6 à 8,
**caractérisée en ce que**
le goujon de guidage (10) et le goujon (15) sont réalisés sur le chariot de guidage (9), réglé par un moteur dans la direction longitudinale du véhicule.

10. Installation de réglage selon l'une quelconque des revendications 3 à 9,
**caractérisée en ce que**
la pièce de réglage (5) et la pièce formant coulisse (6) pivotent en sens opposé lorsqu'on relève le bord arrière du panneau (1) et elles pivotent dans le même sens lorsqu'on abaisse le bord arrière du panneau (1), la pièce de réglage (5) étant chaque fois abaissée par sa zone arrière.
